# EUROPÄISCHE PATENTSCHRIFT

(11) **EP 3 152 930 B1**
(45) Veröffentlichungstag und Bekanntmachung des Hinweises auf die Patenterteilung: **07.03.2018**
(21) Anmeldenummer: 15727556.1
(22) Anmeldetag: 28.05.2015
(51) Int. Cl.: H04W 4/04, B60R 16/02

(54) **SPARSAMER KRAFTFAHRZEUGBETRIEB WÄHREND EINER PARKPHASE**
ECONOMICAL MOTOR VEHICLE OPERATION DURING A PARKED PHASE
FONCTIONNEMENT ÉCONOMIQUE D'UN VÉHICULE AUTOMOBILE PENDANT UNE PHASE DE STATIONNEMENT

(30) Priorität: 07.06.2014 DE 102014008619
(43) Veröffentlichungstag der Anmeldung: 12.04.2017
(73) Patentinhaber: Audi AG, 85045 Ingolstadt (DE)
(72) Erfinder: DALKE, Christoph, 85110 Kipfenberg (DE); SCHMAILZL, Michael, 85092 Kösching (DE); HIRSCHBURGER, Friedhelm, 85051 Ingolstadt (DE)
(74) Vertreter: Bauer, Dominik Michael
(86) Internationale Anmeldenummer: PCT/EP2015/001092
(87) Internationale Veröffentlichungsnummer: WO 2015/185196

(56) Entgegenhaltungen:
- US-A1- 2004 127 206
- US-A1- 2004 198 255
- US-B1- 6 339 397

## Beschreibung

Die Erfindung betrifft ein Steuergerät für ein Kraftfahrzeug sowie ein Verfahren zum Betreiben des Steuergeräts während einer Parkphase des Kraftfahrzeugs. In der Parkphase ist die Zündung des Kraftfahrzeugs ausgeschaltet, so dass elektrische Geräte des Kraftfahrzeugs ausschließlich über einen elektrischen Energiespeicher des Kraftfahrzeugs, beispielsweise eine Batterie, mit elektrischer Energie versorgt werden können. Daher wird zum Einleiten der Parkphase in dem Kraftfahrzeug ein Zündung-aus-Signal ausgesendet, welches die Geräte dazu veranlasst, seinen Energieverbrauch zu reduzieren, um den Energiespeicher des Kraftfahrzeugs zu schonen. Bei dem erfindungsgemäßen Steuergerät ist dennoch ermöglicht, dass eine Serviceroutine oder Dienstroutine weiter durchgeführt wird.

Insbesondere ist es heutzutage wünschenswert, dass ein Kraftfahrzeug auch einen sogenannten Remote-Dienst anbietet, bei welchem das Kraftfahrzeug von außerhalb, beispielsweise über das Internet, gesteuert werden kann. Als Dienstroutine muss somit sichergestellt sein, dass das Kraftfahrzeug auf Steuerbefehle von außerhalb reagiert. Für solche Remote-Dienste bleiben Steuergeräte heutzutage oft dauerhaft beispielsweise in einem Handynetz eingebucht und warten auf eingehende SMS-Nachrichten (SMS Short Message Service) oder einen eingehenden Anruf. Um über eine Dauer von mehreren Monaten diese Funktion bei einem geparkten Kraftfahrzeug anbieten zu können, muss eine sehr große Batterie eingebaut werden.

Aus der WO 2006/119976 A1 ist hierzu bekannt, mittels eines fahrzeugseitigen Empfängers einer Funkfernbedienung ein Aufwecksignal zu empfangen, wobei durch das Aufwecksignal mindestens ein drahtloses Kommunikations-Modul des Kraftfahrzeugs aufgeweckt wird. Somit kann das Kommunikations-Modul während einer Parkphase zunächst abgeschaltet werden, und es muss nur der Empfänger der Funkfernbedienung mit elektrischer Energie dauerhaft versorgt werden.

Aus der WO 2007/028624 A1 ist bekannt, bei einem Kraftfahrzeug einen Bewegungssensor bereitzustellen und durch den Bewegungssensor ein Ortungsgerät des Kraftfahrzeugs zwischen einem Schlafmodus und einem Arbeitsmodus umzuschalten. Das Ortungsgerät wird also in Abhängigkeit von einer Bewegung des Kraftfahrzeugs aktiviert und sendet dann über ein Mobilfunkmodul Ortskoordinaten per Kurznachrichten (SMS) aus.

Aus der DE 103 47 839 A1 ist bekannt, nach dem Einleiten einer Parkphase ein Steuergerät zunächst in einem Nachlaufmodus für eine vorbestimmte Zeitspanne weiterzubetreiben und erst nach Ablauf der Zeitspanne eine Datenübertragungsverbindung zu beenden und eine Kommunikationseinheit zu deaktivieren. Hierdurch bleibt das Kraftfahrzeug während des Nachlaufmodus noch über Funk von außerhalb des Kraftfahrzeugs steuerbar.

Aus der DE 10 2006 024 634 B4 ist ein Verfahren zur drahtlosen Übermittlung von Infotainmentkomponenten zwischen einem Fahrzeugnetzwerk in einem Fahrzeug und einem fahrzeugexternen Netzwerk beschrieben. Das Fahrzeugnetzwerk weist einen empfangsbereiten Zustand und einen Ruhezustand auf, wobei über eine Fernbedienung des Fahrzeugs von dem Ruhezustand in den empfangsbereiten Zustand umgeschaltet wird.

Die aus dem Stand der Technik bekannten Methoden zum Wechseln zwischen einem Ruhezustand und einem empfangsbereiten Zustand beruhen auf dem durchgängigen Betrieb eines Empfängers, welcher ein Aufwecksignal in dem Kraftfahrzeug erzeugen kann. Für den Fall, dass ein Kraftfahrzeug über mehrere Wochen oder Monate hinweg geparkt bleiben soll, also die Parkphase so lange dauert, führt der durchgängige Betrieb eines Empfängers ebenfalls zu einer Entladung der Fahrzeugbatterie, durch welche die Wiederstartfähigkeit des Kraftfahrzeugs gefährdet sein kann.

In der DE 10 2007 046 944 A1 ist eine Druckluftversorgungseinrichtung mit Leckageanalyse beschrieben. Ein Druckluftversorgungsmodul weist ein Steuergerät mit einem Aufweckschaltkreis auf, der mit einem externen Timer gekoppelt ist. Der Timer gibt Aufwecksignale an das Steuergerät mit Aufweckschaltkreis aus, und das Steuergerät führt bei Empfang des Aufwecksignals eine Messung eines Systemdrucks in dem Kraftfahrzeug durch, während die Zündung des Nutzfahrzeugs ausgeschaltet ist.

Aus der DE 102 55 449 A1 ist eine Vorrichtung zum Wecken eines Steuergeräts in einem Kraftfahrzeug beschrieben. Bei der Vorrichtung sind Weckmittel im Ruhezustand nicht mit Strom versorgt, sondern weisen einen eigenen, entladbaren Energiespeicher auf.

Im Dokument US 2004/0127206 A1 ist ein Kraftfahrzeug beschrieben, dessen Mobilfunkmodul während einer Parkphase des Kraftfahrzeugs periodisch betrieben wird, um Pager-Nachrichten empfangen zu können. In welchen Abständen das Mobilfunkmodul betrieben werden soll, wird durch einen DRX-Parameterwert festgelegt, der bei Empfangen eines Zündung-aus-Signals einmalig für die anschließende Parkphase ermittelt wird.

Im Dokument US 2004/0198255 A1 ist ein Kraftfahrzeug beschrieben, das während einer Parkphase regelmäßig ein Funkmodul aktiviert, um Steuerbefehle zu empfangen. Nach jeder aktiven Phase des Funkmoduls wird ein Timer auf einen Timerwert eingestellt und anschließend das Funkmodul ausgeschaltet. Als Timerwert kann beispielsweise die Zeitdauer fünfzehn Minuten eingestellt werden.

Im Dokument US 6,339,397 B1 ist zum Verfolgen von Waren, die beispielsweise mittels eines Güterzugs transportiert werden, eine Lokalisationseinheit beschrieben. Die Lokalisationseinheit wird in regelmäßigen Abständen aktiviert und meldet ihre aktuelle Position, wobei zum Einschalten der Lokalisationseinheit ein Timer genutzt wird.

Der Erfindung liegt die Aufgabe zugrunde, bei einem Kraftfahrzeug einen sparsamen Betrieb während einer Parkphase zu ermöglichen und hierbei eine Dienstroutine in dem Kraftfahrzeug durchzuführen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Erfindungsgemäß weist ein Steuergerät des Kraftfahrzeugs eine elektronische Überwachungseinheit zum Durchführen der Dienstroutine auf. Beispielsweise kann die Überwachungseinheit durch ein Mobilfunkmodul bereitgestellt sein, dessen Dienstroutine umfassen kann, zu überprüfen, ob neue SMS-Nachrichten vorliegen. Die Überwachungseinheit wird aus dem elektrischen Bordnetz versorgt, d.h. in dem Steuergerät ist die Überwachungseinheit in bekannter Weise über ein Netzteil mit dem elektrischen Bordnetz des Kraftfahrzeugs gekoppelt und das Netzteil ist dazu ausgelegt, die Überwachungseinheiten mit elektrischer Energie aus dem Bordnetz zu versorgen. Bei dem elektrischen Bordnetz kann es sich beispielsweise um ein Niedervolt-Bordnetz handeln, das beispielsweise eine 12 Volt-Versorgungsspannung bereitstellt.

Bei dem Verfahren trennt das Netzteil in an sich bekannter Weise die Überwachungseinheit von dem Bordnetz, falls das Zündung-aus-Signal in dem Kraftfahrzeug vorliegt oder ausgesendet wird. Durch das elektrische Trennen der Überwachungseinheit von dem Bordnetz wird also die Überwachungseinheit zunächst einmal ausgeschaltet. Das Netzteil stellt also einen Powercontroller dar, welcher in dem Steuergerät separat einzelne Komponenten, insbesondere die Überwachungseinheit, schaltet.

Um nun dennoch während der Parkphase die Dienstroutine durchführen zu können, ist in dem erfindungsgemäßen Steuergerät eine Uhr mit einem Timer bereitgestellt. Gemäß dem Verfahren stellt das Netzteil in der Parkphase den Timer ein und schaltet sich dann selbst ab. In vorteilhafter Weise ist nun der Energieverbrauch des Steuergeräts durch das elektrische Trennen der Überwachungseinheit von dem Bordnetz und das Abschalten des Netzteils reduziert. Die Uhr läuft aber weiter. Der Timer erzeugt bei abgeschaltetem Netzteil in Abhängigkeit von einer Zeitangabe, die von der Uhr ermittelt wird, ein Aufwecksignal. Die Zeitangabe kann z.B. die aktuelle Uhrzeit sein. Die Uhr kann aber auch als Zähler, z.B. als Count-down-Zähler ausgelegt sein. Das Netzteil weist eine Weckeinrichtung auf, die in Abhängigkeit von dem Wecksignal das Netzteil wieder einschaltet. Beispielsweise kann das Wecksignal an einer Basis oder einem Gate eines Transistors angelegt werden und hierdurch der Transistor durchgeschaltet werden, was dem Netzteil einen Versorgungsstrom zuführen kann. Das wieder eingeschaltete Netzteil verbindet dann die Überwachungseinheit elektrisch mit dem Bordnetz. Somit ist die Überwachungseinheit wieder in Betrieb und kann die Dienstroutine durchführen. Ein Timerwert des Timers kann beispielsweise auf 60 Minuten eingestellt sein, so dass das Netzteil nach 60 Minuten durch den Timer wieder eingeschaltet wird.

Durch die Erfindung ergibt sich der Vorteil, dass in dem Steuergerät weder die Überwachungseinheit, noch das Netzteil durchgehend betrieben werden müssen, um zu vorbestimmten Zeitpunkten die Dienstroutine durchführen zu können. Es ist lediglich der Betrieb der Uhr nötig.

Gemäß dem Verfahren ist hierbei vorgesehen, dass die Überwachungseinheit ein Funkmodul umfasst und die Dienstroutine umfasst, dass das Funkmodul eine Funkverbindung zu einem fahrzeugexternen Server aufbaut. Dann kann in besonders vorteilhafter Weise ein Remote-Dienst für zum Fernsteuern des Kraftfahrzeugs bereitgestellt werden, durch welche in dem Kraftfahrzeug ein Parameter von außen eingestellt werden kann.

Besonders vorteilhaft ist es, dass das Funkmodul über die Funkverbindung ein das Vorliegen von Nachrichtendaten signalisierendes Nachrichtensignal empfängt und das Funkmodul in Abhängigkeit von dem Nachrichtensignal ein Aufwecksignal in dem Steuergerät erzeugt. Hierbei ist es besonders vorteilhaft, dass das Funkmodul ein Mobilfunkmodul ist, also beispielsweise ein GSM-Modul oder ein UMTS-Modul oder ein LTE-Modul aufweist. Bei einem Mobilfunkmodul reicht es, wenn sich dieses in einem Mobilfunknetz anmeldet, um hierdurch das serverseitige Melden von Nachrichtendaten auszulösen. Das Mobilfunkmodul erhält dann bei Vorliegen von Nachrichten ein Statussignal, durch welches in beschriebener Weise die Erzeugung des Aufwecksignals ausgelöst werden kann. Das Funkmodul kann aber auch beispielsweise ein WLAN-Modul (WLAN-Wireless Local Area Network) sein, welches mit einem Kommunikationsnetzwerk eine Funkverbindung aufbaut.

Liegen nun Nachrichtendaten vor, ist also ein Nachrichtensignal vorhanden, so sieht das Verfahren vor, dass das Netzteil in Abhängigkeit von dem Aufwecksignal einen Hauptprozessor des Steuergeräts aktiviert und die Nachrichtdaten durch den Hauptprozessor über die Funkverbindung abgerufen und in Abhängigkeit von den Nachrichtendaten das Steuergerät eingestellt wird. Mit anderen Worten bleibt der Leistungsverbrauch des Steuergeräts so lange gering, bis tatsächlich Nachrichtendaten vorliegen. Erst bei Vorliegen von Nachrichtendaten wird das Steuergerät vollständig durch Aktivieren seines Hauptprozessors eingeschaltet und dann eine Konfiguration in dem Steuergerät gemäß den Nachrichtendaten vorgenommen. Die Nachrichtendaten können beispielsweise einen Konfigurationsbefehl betreffend eine Standheizung umfassen, so dass ein Benutzer von außerhalb des Kraftfahrzeugs beispielsweise von einem Personal Computer aus, die Standheizung des Kraftfahrzeugs oder ein anderes Steuergerät des Kraftfahrzeugs einstellen kann.

Optional kann es sich bei der Uhr um eine sogenannte RTC (Real Time Clock) handeln. Eine solche Uhr kann durch eine von dem Bordnetz verschiedene, in dem Steuergerät bereitgestellte Energiequelle mit elektrischer Energie versorgt werden. Beispielsweise kann die Uhr durch eine Batterie, beispielsweise eine Knopfzelle, oder einen Akkumulator mit elektrischer Energie versorgt werden. Dann ist zum Bereitstellen der Timerwertabhängigen Weckfunktion überhaupt keine elektrische Energie aus dem Bordnetz nötig. Eine Uhr mit eigener Energiequelle ist aber kein Muss. Durch eine Uhr, wie sie für die Erfindung benötigt wird, erhöht sich eine Stromaufnahme nur um weniger als ein Milliampere, so dass auch das Bordnetz genutzt werden kann.

Der beschriebene Aufweckmechanismus kann auch zyklisch wiederholt werden. Eine Ausführungsform des Verfahrens sieht hierzu vor, dass das wieder eingeschaltete Netzteil die Überwachungseinheit nach der Durchführung der Dienstroutine wieder elektrisch vom Bordnetz trennt, sie also wieder ausschaltet, den Timer erneut einstellt und sich wieder selbst abschaltet. Mit anderen Worten ist dann wieder nur die Uhr in Betrieb, die gemäß dem eingestellten Timerwert dann beispielsweise wieder nach 60 Minuten oder allgemein nach einer Ruhephase das Netzteil erneut einschaltet. So kann über einen verhältnismäßig langen Zeitraum hinweg, beispielsweise mehrere Wochen oder mehrere Monate, das Netzteil in vorbestimmten Zeitabständen eingeschaltet werden und durch das Netzteil dann die Überwachungseinheit zum Durchführen der Dienstroutine eingeschaltet werden.

Um den Energieverbrauch noch weiter zu senken, sieht eine Ausführungsform des Verfahrens vor, dass das wieder eingeschaltete Netzteil während der Durchführung der Dienstroutine, während also die Überwachungseinheit aktiv ist, den Timer ebenfalls einstellt und sich selbst abschaltet. Mit anderen Worten bleibt also die Überwachungseinheit aktiv und das Netzteil schaltet sich ab. Hierbei bleibt aber die Überwachungseinheit mit dem Bordnetz elektrisch gekoppelt, so dass die Überwachungseinheit weiter die Dienstroutine durchführen kann.

Das Netzteil zählt die seit dem Zündung-aus-Signal durchgeführten Wiederholungen der Dienstroutine mittels eines Wiederholungszählers. Entsprechend wird der Timerwert in dem Timer in Abhängigkeit von dem Wiederholungszähler eingestellt. Hierdurch kann in vorteilhafter Weise beispielsweise ein Zeitintervall zwischen den einzelnen Durchführungen der Dienstroutine in Abhängigkeit von einem zeitlichen Abstand vom Zündung-aus-Signal eingestellt werden. Beispielsweise kann ein erster Timerwert zu einem vorbestimmten ersten Zeitraum genutzt werden, beispielsweise während der ersten Woche und ein bevorzugt größerer zweiter Timerwert während eines darauffolgenden zweiten Zeitraums, beispielsweise also nach der ersten Woche. Die Zeitabstände zwischen den Wiederholungen der Dienstroutine werden hierdurch größer.

Um eine Speicherkapazität einer Fahrzeugbatterie des Kraftfahrzeugs nicht durch den Betrieb des Steuergeräts während der Parkphase zu erschöpfen, sieht eine Ausführungsform vor, in dem Steuergerät einen Maximalwert für das Durchführen der Dienstroutine zu speichern. Eine Anzahl der Wiederholungen der Dienstroutine wird dann durch das Netzteil in Abhängigkeit von dem Maximalwert begrenzt. Der Maximalwert kann also beispielsweise die maximale Anzahl an Wiederholungen oder die maximale Anzahl an Durchführungen der Dienstroutine angeben.

In Bezug auf die Dienstroutine kann durch die Erfindung eine Vielzahl unterschiedlicher Funktionalitäten bereitgestellt werden, die das Steuergerät während der Parkphase selbsttätig durchführt. Beispielsweise kann als Dienstroutine eine Temperaturüberwachung in einem Kraftfahrzeuginnenraum bereitgestellt sein. Das Steuergerät überwacht dann, ob die Temperatur in einem vorbestimmten Temperaturbereich liegt und aktiviert andernfalls beispielsweise eine Klimatisierungseinrichtung oder öffnet ein Schiebedach, um heiße Luft entweichen zu lassen. Allgemein ist unter einer Dienstroutine zu verstehen, dass die Überwachungseinheit einen Istwert zu einem vorbestimmten Parameter erfasst und in Abhängigkeit von dem Istwert entweder nichts unternimmt oder eine Funktion in dem Steuergerät auslöst.

Wie bereits ausgeführt, gehört zu der Erfindung auch ein Steuergerät, welches die jeweiligen, im Zusammenhang mit den Ausführungsformen des erfindungsgemäßen Verfahrens beschriebenen Komponenten aufweist. Das erfindungsgemäße Steuergerät ist entsprechend dazu ausgelegt, die jeweilige Ausführungsform des erfindungsgemäßen Verfahrens durchzuführen.

Schließlich gehört zu der Erfindung auch ein Kraftfahrzeug, welches mindestens eine Ausführungsform des erfindungsgemäßen Steuergeräts aufweist.

Das erfindungsgemäße Kraftfahrzeug ist bevorzugt als Kraftwagen, insbesondere als Personenkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs;
- Fig. 2: ein Diagramm mit einem schematisierten Zeitverlauf eine Stromverbrauchs des Steuergeräts von Fig. 1 während der Durchführung einer Ausführungsform des erfindungsgemäßen Verfahrens,
- Fig. 3: ein Diagramm mit einem schematisierten Verlauf eines Leistungsverbrauchswerts, wie er sich bei der Durchführung einer Ausführungsform des erfindungsgemäßen Verfahrens in dem Kraftfahrzeug von Fig. 1 ergeben kann.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

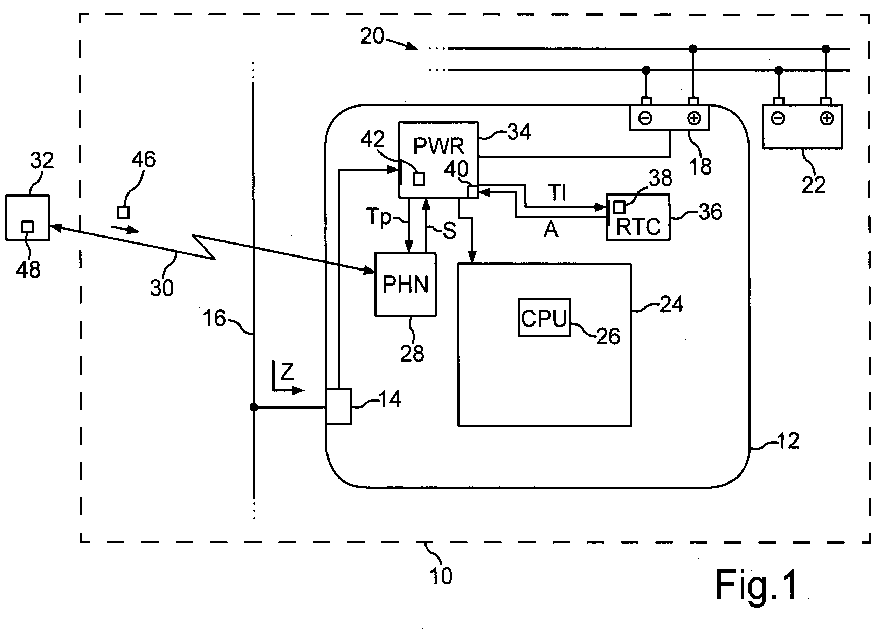

Fig. 1 zeigt ein Kraftfahrzeug 10, bei dem es sich beispielsweise um einen Kraftwagen, wie etwa einem Personenkraftwagen, handeln kann. In dem Kraftfahrzeug 10 kann sich ein Steuergerät 12 befinden, bei dem es sich bevorzugt um ein Infotainment-Steuergerät handelt. Das Steuergerät 12 kann über einen Busankoppler oder Busanschluss 14 mit einem Kommunikationsbus des Kraftfahrzeugs 10, beispielsweise einem CAN-Bus (CAN-Controller Area Network) oder einem FlexRay-Bus. Das Steuergerät 12 kann über einen Versorgungsanschluss 18 mit einem Bordnetz 20 des Kraftfahrzeugs 10 gekoppelt sein. Das Bordnetz 20 kann dazu ausgelegt sein, den Versorgungsanschluss 18 beispielsweise über Kupferkabel, mit einer Fahrzeugbatterie 22 des Kraftfahrzeugs 10 elektrisch zu verbinden.

In dem gezeigten Beispiel befindet sich das Kraftfahrzeug 10 in einem ausgeschalteten Zustand, das heißt eine Zündung des Kraftfahrzeugs 10 ist abgeschaltet und (nicht dargestellte) Geräte des Kraftfahrzeugs 10 sind in einem Ruhemodus oder ausgeschaltet. Hierzu wurde zum Einleiten der Parkphase ein Zündung-aus-Signal Z über den Kommunikationsbus 16 in dem Kraftfahrzeug 10 ausgesendet. Der Busanschluss 14 hat das Zündung-aus-Signal Z empfangen. Über ein Zündung-ein-Signal können die Geräte des Kraftfahrzeugs 10 wieder geweckt oder aktiviert werden.

In dem Steuergerät 12 können zum Bereitstellen einer Funktionalität des Steuergeräts, also beispielsweise zum Bereitstellen von Infotainmentfunktionen, ein Hauptrechner 24 mit einem Hauptprozessor 26 sowie ein Funkmodul 28, beispielsweise ein Mobilfunkmodul PHN, bereitgestellt sein. Über das Funkmodul 28 kann durch das Steuergerät 12 eine Funkverbindung 30 zu einer fahrzeugexternen Datenquelle 32, beispielsweise einem Server in einem Mobilfunknetz oder dem Internet, aufgebaut werden. Der Hauptrechner 24 und das Funkmodul 28 können durch ein Netzteil oder einen Powercontroller 34 ein- und ausgeschaltet werden, indem der Powercontroller 34 den Hauptrechner beziehungsweise das Funkmodul 28 mit dem Versorgungsanschluss 18 koppelt oder von diesem elektrisch trennt.

Bei Empfangen des Zündung-aus-Signals Z wird dies dem Powercontroller 34 durch den Busanschluss 14 signalisiert. Der Powercontroller 34 schaltet daraufhin zum Reduzieren des Energieverbrauchs des Steuergeräts 12 den Hauptrechner 24 und das Funkmodul 28 ab.

Das Steuergerät 12 ist des Weiteren mit einer Realtime-Clock RTC, das heißt einer Uhr 36 bestückt. Bevor sich das Steuergerät 12 schlafen legt, das heißt auch der Powercontroller 34 sich selbst abschaltet, das heißt in einen Standby-Modus geht, das heißt ein Prozessor des Powercontrollers 34 abgeschaltet wird, wird ein Timer 38 der Uhr 36 auf einen Zeitwert oder Timerwert TI (Timer long) programmiert. Nach dem Konfigurieren des Timers 38 schaltet sich der Powercontroller 34 ebenfalls ab und hierdurch ist ein Energieverbrauch oder Leistungsverbrauch des Steuergeräts 12 auf ein Minimum eingestellt. Wenn der Timer 38 abgelaufen ist, erzeugt die Uhr 36 ein Aufwecksignal A, welches an eine Weckeinrichtung 40 des Powercontrollers 34 übertragen wird. Beispielsweise kann ein Transistor im Powercontroller 34 durch das Aufwecksignal A in einen leitenden Zustand geschaltet werden. Der Powercontroller 34 führt nach dem Einschalten eine Steuerroutine durch, durch welche das Funkmodul 38 für eine Zeitdauer Tp (Time phone) eingeschaltet wird.

Nachdem Tp abgelaufen ist, wird durch den Powercontroller 34 der Timer 38 erneut für den Timerwert TI eingestellt und das Steuergerät 12 legt sich wieder schlafen. Dieser Ablauf wiederholt sich zyklisch bis zu einer maximalen Anzahl, die in einem Maximalwertspeicher 42 gespeichert sein kann.

Während der Zeitdauer Tp kann vom Funkmodul 28, das beispielsweise ein intelligentes Mobilfunkmodul mit eigener Prozessoreinrichtung sein kann, die Funkverbindung 30 zu einem Server, d.h. der Datenquelle 32, aufgebaut werden und beim Server abgefragt werden, ob ein Auftrag, das heißt ein Steuerbefehl, für das Steuergerät 12 vorliegt. Dieser Auftrag könnte zum Beispiel die Programmierung einer Standheizung sein.

Indem das Steuergerät 12 nur für die Zeitdauer des Abfragens nach einem Auftrag und gegebenenfalls die Durchführung des Auftrags betrieben wird, ansonsten aber der Stromverbrauch des Steuergeräts 12 minimiert ist, ergibt sich eine längere Verfügbarkeit der Weckfähigkeit des Steuergeräts 12 während der Parkphase.

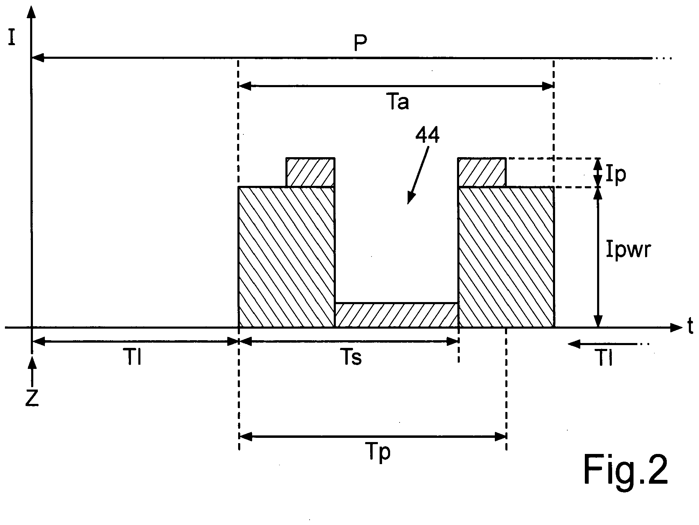

Während das Funkmodul 28 in der beschriebenen Weise aktiv ist, kann weiter Strom gespart werden, indem der Powercontroller 34 den Timer 38 für einen Timerwert Ts (Timer short) programmiert und dann der Powercontroller 34 in den Ruhemodus geht, während das Funkmodul 28 weiterbetrieben wird. In Fig. 2 ist hierzu der Stromverbrauch I des Steuergeräts 12 über der Zeit t während der Parkphase P aufgetragen. Für die Ruhephasen der Dauer TI verbraucht das Steuergerät 12 einen Minimalstrom, der beispielsweise kleiner als 100 Milliampere, insbesondere kleiner als zehn Milliampere, sein kann. Nach Ablauf des Timerwerts TI und Einschalten des Powercontrollers 34 verbraucht der Powercontroller 34 den Verbrauchsstrom Ipwr. Durch Einschalten des Funkmoduls 28 kommt noch der Verbrauchsstrom Ip des Funkmoduls 28 hinzu. In einer Zwischenphase 44 kann der Powercontroller 34 ausgeschaltet werden, bis der Timerwert Ts abgelaufen ist. Danach wird der Powercontroller 34 wieder aktiviert, damit dieser das Funkmodul 28 nach der Zeit Tp ausschalten kann. Anschließend wird der Timer 38 erneut auf den Timerwert TI eingestellt und das Steuergerät 12 wieder deaktiviert. Limitiert wird dieses Verhalten durch den Wert im Maximalspeicherwert 42.

Wenn eine Nachricht 46 während Tp vom Funkmodul 28 empfangen wird, beispielsweise eine SMS-Nachricht, wird das Steuergerät 12 mit einer Weckleitung geweckt, das heißt das Funkmodul 28 erzeugt ein Startsignal S, das beispielsweise an den Powercontroller 34 übertragen werden kann. Daraufhin kann durch den Powercontroller 34 oder allgemein im Steuergerät 12 beispielsweise durch den Hauptrechner 34 über die Funkverbindung 30 ein Kommunikationskanal zu der Datenquelle 32 aufgebaut werden, beispielsweise auf Grundlage eines Kommunikationsprotokolls wie dem HTTP (Hyper Text Transfer Protocol). Hierdurch können dann mittels des Hauptrechners 34 durch von dessen Hauptprozessor 26 ausgeführten Betriebsprogrammen Auftragsdaten 48 empfangen werden und entsprechende Konfigurationen im Steuergerät 12 vorgenommen werden. Die Nachricht 46 stellt also ein Nachrichtensignal dar, welches signalisiert, dass Auftragsdaten 48, also die eigentlichen Nachrichtendaten, in der Datenquelle 32 bereitliegen.

Wird innerhalb vom Ablauf von Ts keine Nachricht 46 empfangen, weckt die Uhr 36 den Powercontroller 34 und dieser schaltet das Funkmodul 28 wieder aus, programmiert den Timer 38 mit dem Timerwert TI und legt sich dann entsprechend für TI wieder schlafen. Insgesamt ergibt sich so eine Aktivitätszeit Ta, die beispielsweise zwei Minuten betragen kann. Die Dauer zwischen zwei Aktivitätsphasen der Länge Ta kann beispielsweise in einem Bereich zwischen einer Minute und beispielsweise 3 Tagen oder einer Woche liegen.

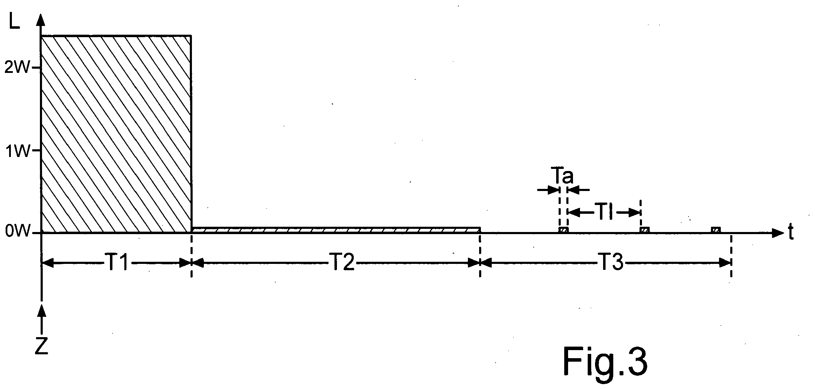

In Fig. 3 ist gezeigt, wie das beschriebene Verfahren in eine Strategie zur Bereitstellung einer adäquaten Reaktionszeit des Steuergeräts 12 auf eine Nachricht 46 für einen Remote-Dienst des Steuergeräts 12 eingebettet sein kann. In Fig. 3 ist hierzu der Leistungsverbrauch L des Steuergeräts 12 über der Zeit t aufgetragen. Gemäß Fig. 3 wird bei der Strategie in Abhängigkeit von dem Zündung-aus-Signal Z zunächst das Steuergerät 12 in einem Normalbetriebsmodus für einen ersten Zeitdauerwert T1 weiterbetrieben, wobei im Normalbetriebsmodus der Hauptprozessor 24 und das Funkmodul 28 aktiv sind und somit die Nachricht 46 sofort durch das Funkmodul 28 empfangen und durch den Hauptrechner 24 verarbeitet werden kann. In einer daran anschließenden Beobachtungsphase wird für einen Zeitdauer T2 das Funkmodul 28 betrieben, aber bei ausgeschaltetem Hauptrechner 24. Hierdurch wird bei Vorliegen einer Nachricht 46 diese unmittelbar an das Funkmodul 28 übertragen, woraufhin durch Erzeugen des Startsignals S der Hauptrechner 26 eingeschaltet werden kann. Daran anschließend wird für eine Zeitdauer T3 das beschriebene zyklische Aufwecken des Steuergeräts 12 durchgeführt, so dass jeweils zur Wachphase innerhalb der Zeitdauer Ta die Nachricht 46 durch das Funkmodul 28 über die Funkverbindung 30 abgerufen werden kann. Die Zeitdauer T3 ergibt sich aus dem Maximalwert im Maximalwertspeicher 42.

Insgesamt zeigt das Beispiel, wie durch die Erfindung ein Infotainment-Steuergerät zyklisch aufwachen und sich bei einem Server anmelden kann, um einen Remote-Dienst anzubieten.

## Patentansprüche

1. Verfahren zum Betreiben eines Steuergeräts (12) eines Kraftfahrzeugs (10) während einer Parkphase (P), in welcher eine Zündung des Kraftfahrzeugs (10) ausgeschaltet ist, wobei das Steuergerät (12) eine elektronische Überwachungseinheit (28) zum Durchführen einer Dienstroutine sowie ein Netzteil (34) zum Versorgen der Überwachungseinheit (28) mit elektrischer Energie aus einem elektrischen Bordnetz (20) des Kraftfahrzeugs (10) aufweist, und bei dem Verfahren das Netzteil (34) in Abhängigkeit von einem zum Einleiten der Parkphase (P) in dem Kraftfahrzeug (10) ausgesendeten Zündung-aus-Signal (Z) die Überwachungseinheit (28) von dem Bordnetz (20) elektrisch trennt, wobei das Netzteil (34) in der Parkphase (P) einen Timer (38) einer Uhr (36) des Steuergeräts (12) einstellt und sich dann selbst abschaltet und der Timer (38) in Abhängigkeit von einer von der Uhr (36) ermittelten aktuellen Zeitangabe ein Aufwecksignal (A) erzeugt und eine Weckeinrichtung (40) des Netzteils (34) in Abhängigkeit von dem Aufwecksignal (A) das Netzteil (34) wieder einschaltet und das wieder eingeschaltete Netzteil (34) die Überwachungseinheit (28) elektrisch mit dem Bordnetz (20) koppelt, wobei die Überwachungseinheit ein Mobilfunkmodul (28) umfasst und die Dienstroutine umfasst, dass das Mobilfunkmodul (28) eine Funkverbindung (30) zu einem fahrzeugexternen Server (32) aufbaut und das Mobilfunkmodul (28) über die Funkverbindung (30) ein das Vorliegen von Nachrichtendaten (48) signalisierendes Nachrichtensignal (46) empfängt und das Mobilfunkmodul (28) in Abhängigkeit von dem Nachrichtensignal (46) ein Aufwecksignal (S) in dem Steuergerät (12) erzeugt und das Netzteil (34) in Abhängigkeit von dem Aufwecksignal (S) einen Hauptprozessor (26) des Steuergeräts (12) aktiviert und durch den Hauptprozessor (26) die Nachrichtendaten (48) über die Funkverbindung (30) abgerufen und in Abhängigkeit von den Nachrichtendaten (48) das Steuergerät (12) eingestellt wird,
**dadurch gekennzeichnet, dass**
das Netzteil (34) die seit dem Zündung-aus-Signal (Z) durchgeführten Wiederholungen der Dienstroutine mittels eines Wiederholungszählers zählt und einen in dem Timer (38) eingestellten Timerwert in Abhängigkeit von dem Wiederholungszähler einstellt.

2. Verfahren nach Anspruch 1, wobei die Uhr (36) durch eine von dem Bordnetz (20) verschiedene, in dem Steuergerät (12) bereitgestellte Energiequelle oder über das Bordnetz (20) mit elektrischer Energie versorgt wird.

3. Verfahren nach einem der vorhergehenden Ansprüche, wobei das wieder eingeschaltete Netzteil (34) die Überwachungseinheit (28) nach der Durchführung der Dienstroutine wieder elektrisch vom Bordnetz (20) trennt, den Timer (38) erneut einstellt und sich wieder selbst abschaltet.

4. Verfahren nach einem der vorhergehenden Ansprüche, wobei das wieder eingeschaltete Netzteil (34) während der Durchführung der Dienstroutine den Timer (38) einstellt und sich wieder selbst abschaltet, wobei die Überwachungseinheit (28) mit dem Bordnetz (20) elektrisch gekoppelt bleibt.

5. Verfahren nach einem der vorhergehenden Ansprüche, wobei ein erster Timerwert zu einem vorbestimmten ersten Zeitraum genutzt wird und ein größerer zweiter Timerwert während eines darauffolgenden zweiten Zeitraums.

6. Verfahren nach einem der vorhergehenden Ansprüche, wobei in dem Steuergerät (12) ein Maximalwert (42) für das Durchführen der Dienstroutine gespeichert ist und eine Anzahl der Wiederholungen der Dienstroutine durch das Netzteil (34) in Abhängigkeit von dem Maximalwert (42) begrenzt wird.

7. Steuergerät (12) für ein Kraftfahrzeug (10), wobei das Steuergerät (12) eine elektronische Überwachungseinheit (28) zum Durchführen einer Dienstroutine sowie ein Netzteil (34) zum Versorgen der Überwachungseinheit (28) mit elektrischer Energie aus einem elektrischen Bordnetz (20) des Kraftfahrzeugs (10) aufweist,
**dadurch gekennzeichnet, dass**
das Steuergerät (12) eine Uhr (36) mit einem Timer (38) und das Netzteil (34) eine Weckeinrichtung (40) zum Einschalten des Netzteils (34) in Abhängigkeit von einem Wecksignal (A) des Timers (38) aufweist und das Steuergerät (12) zum Durchführen eines Verfahren nach einem der vorhergehenden Ansprüche ausgelegt ist.

8. Kraftfahrzeug (10) mit mindestens einem Steuergerät (12) nach Anspruch 7.

## Claims

1. Method for operating a control unit (12) of a motor vehicle (10) during a parked phase (P), in which an ignition of the motor vehicle (10) is switched off, wherein the control unit (12) comprises an electronic monitoring unit (28) for performing a service routine and a power supply (34) for supplying the monitoring unit (28) with electrical energy from an on-board electrical network (20) of the motor vehicle (10), wherein the power supply (34) electrically separates the monitoring unit (28) from the on-board network (20) as a function of an ignition-off signal (Z) transmitted in the motor vehicle (10) for initiating the parked phase (P), wherein the power supply (34) sets a timer (38) of a clock (36) on the control unit (12) in the parked phase (P) and then switches itself off, and the timer (38) generates a wake-up signal (A) as a function of a current time indication determined by the clock (36) and a wake-up device (40) of the power supply (34) switches the power supply (34) on again as a function of the wake-up signal (A) and the switched on power supply (34) electrically connects the monitoring unit (28) to the on-board network (20), wherein the monitoring unit comprises a mobile radio module (28) and the service routine comprises that the mobile radio module (28) establishes a radio connection (30) to a vehicle-external server (32) and the mobile radio module (28) receives a message signal (46) signalling the presence of message data (48) via the radio connection (30) and the mobile radio module (28) generates a wake-up signal (S) in the control unit (12) as a function of the message signal (46) and the power supply (34) activates a main processor (26) of the control unit (12) as a function of the wake-up signal (S) and the message data (48) are retrieved by the main processor (26) via the radio connection (30) and the control unit (12) is set as a function of the message data (48),
**characterised in that** the power supply (34) counts the repetitions of the service routine carried out since the ignition-off signal (Z) by means of a repetition counter and sets a timer value set in the timer (38) as a function of the repetition counter.

2. Method according to claim 1, wherein the clock (36) is supplied with electrical energy by an energy source distinct from the on-board network (20) and provided in the control unit (12) or via the on-board network (20).

3. Method according to any of the preceding claims, wherein the switched on power supply (34) electrically separates the monitoring unit (28) again from the on-board network (20) after performing the service routine, resets the timer (38) and switches itself off again.

4. Method according to any of the preceding claims, wherein the switched on power supply (34) sets the timer (38) during the performance of the service routine and switches itself off again, wherein the monitoring unit (28) remains electrically connected to the on-board network (20).

5. Method according to any of the preceding claims, wherein a first timer value is used for a predetermined first time period and a larger second timer value is used during a subsequent second time period.

6. Method according to any of the preceding claims, wherein at the control unit (12) a maximum value (42) for performing the service routine is stored and a number of the repetitions of the service routine is limited, by the power supply (34), as a function of the maximum value (42).

7. Control unit (12) for a motor vehicle (10), wherein the control unit (12) comprises an electronic monitoring unit (28) for performing a service routine and a power supply (34) for supplying the monitoring unit (28) with electrical energy from an on-board electrical network (20) of the motor vehicle (10)
**characterised in that**
the control unit (12) comprises a clock (36) with a timer (38) and the power supply (34) comprises a wake-up device (40) for switching on the power supply (34) as a function of a wake-up signal (A) of the timer (38) and the control unit (12) is configured to carry out a method according to any of the preceding claims.

8. Motor vehicle (10) with at least one control unit (12) according to claim 7.

## Revendications

1. Procédé de fonctionnement d'un appareil de commande (12) d'un véhicule automobile (10) pendant une phase de stationnement (P), dans laquelle un allumage du véhicule automobile (10) est coupé,
dans lequel l'appareil de commande (12) comporte une unité de surveillance (28) électronique destinée à l'exécution d'une routine de service ainsi qu'un bloc d'alimentation (34) destiné à l'alimentation de l'unité de surveillance (28) en énergie électrique à partir d'un réseau de bord (20) électrique du véhicule automobile (10), et dans le procédé le bloc d'alimentation (34) coupe électriquement l'unité de surveillance (28) du réseau de bord (20) en fonction d'un signal de coupure d'allumage (Z) émis pour déclencher la phase de stationnement (P) dans le véhicule automobile (10),
dans lequel le bloc d'alimentation (34) dans la phase de stationnement (P) règle un temporisateur (38) d'une horloge (36) de l'appareil de commande (12) et se coupe ensuite lui-même et le temporisateur (38) produit un signal de réveil (A) en fonction d'une indication temporelle actuelle déterminée par l'horloge (36) et un dispositif de réveil (40) du bloc d'alimentation (34) allume à nouveau le bloc d'alimentation (34) en fonction du signal de réveil (A) et le bloc d'alimentation (34) à nouveau allumé couple électriquement l'unité de surveillance (28) au réseau de bord (20),
dans lequel l'unité de surveillance comprend un module de radiocommunication mobile (28) et la routine de service comprend le fait que le module de radiocommunication mobile (28) établit une liaison radio (30) vers un serveur (32) externe au véhicule et le module de radiocommunication mobile (28) reçoit par l'intermédiaire de la liaison (30) un signal d'informations (46) signalant la présence de données d'informations (48) et le module de radiocommunication mobile (28) produit un signal de réveil (S) dans l'appareil de commande (12) en fonction du signal d'informations (46) et le bloc d'alimentation (34) active un processeur principal (26) de l'appareil de commande (12) en fonction du signal de réveil (S) et les données d'informations (48) sont interrogées par le processeur principal (26) par l'intermédiaire de la liaison radio (30) et l'appareil de commande (12) est réglé en fonction des données d'informations (48),
**caractérisé en ce que** le bloc d'alimentation (34) compte les répétitions de la routine de service ayant eu lieu depuis le signal de coupure d'allumage (Z) au moyen d'un compteur de répétitions et règle une valeur de temporisateur réglée dans le temporisateur (38) en fonction du compteur de répétitions.

2. Procédé selon la revendication 1, dans lequel l'horloge (36) est alimentée en énergie électrique par une source d'énergie mise à disposition dans l'appareil de commande (12) et différente du réseau de bord (20) ou par l'intermédiaire du réseau de bord (20).

3. Procédé selon l'une quelconque des revendications précédentes, dans lequel le bloc d'alimentation (34) à nouveau allumé sépare à nouveau électriquement l'unité de surveillance (28) du réseau de bord (20) après l'exécution de la routine de service, règle à nouveau le temporisateur (38) et se coupe à nouveau lui-même.

4. Procédé selon l'une quelconque des revendications précédentes, dans lequel le bloc d'alimentation (34) à nouveau allumé règle le temporisateur (38) pendant l'exécution de la routine de service et se coupe à nouveau lui-même, l'unité de surveillance (28) restant couplée électriquement au réseau de bord (20).

5. Procédé selon l'une quelconque des revendications précédentes, dans lequel une première valeur de temporisateur est utilisée dans un premier intervalle de temps prédéterminé et une deuxième valeur de temporisateur, plus grande, est utilisée pendant un deuxième intervalle de temps qui fait suite au premier.

6. Procédé selon l'une quelconque des revendications précédentes, dans lequel une valeur maximale (42) pour l'exécution de la routine de service est mémorisée dans l'appareil de commande (12) et un nombre de répétitions de la routine de service par le bloc d'alimentation (34) est limité en fonction de la valeur maximale (42).

7. Appareil de commande (12) pour un véhicule automobile (10), dans lequel l'appareil de commande (12) comporte une unité de surveillance (28) électronique destinée à l'exécution d'une routine de service ainsi qu'un bloc d'alimentation (34) destiné à l'alimentation de l'unité de surveillance (28) en énergie électrique à partir d'un réseau de bord (20) électrique du véhicule automobile (10),
**caractérisé en ce que** l'appareil de commande (12) comporte une horloge (36) avec un temporisateur (38) et le bloc d'alimentation (34) comporte un dispositif de réveil (40) destiné à allumer le bloc d'alimentation (34) en fonction d'un signal de réveil (A) du temporisateur (38) et l'appareil de commande (12) est conçu pour la mise en oeuvre d'un procédé selon l'une quelconque des revendications précédentes.

8. Véhicule automobile (10) avec au moins un appareil de commande (12) selon la revendication 7.
